# EUROPEAN PATENT SPECIFICATION

(11) **EP 1 571 444 B1**
(45) Date of publication and mention of the grant of the patent: **26.10.2011**
(21) Application number: 05001711.0
(22) Date of filing: 27.01.2005
(51) Int. Cl.: G01N 27/407

(54) **Gas detecting system**
Gassensor
Capteur de gaz

(30) Priority: 27.01.2004 JP 2004018783
(43) Date of publication of application: 07.09.2005
(73) Proprietor: NGK SPARK PLUG CO., LTD, Mizuho-ku Nagoya-shi Aichi (JP)
(72) Inventor: Inoue, Yoshinori, Mizuho-ku Nagoya-shi Aichi (JP); Ieda, Norikazu, Mizuho-ku Nagoya-shi Aichi (JP); Tanaka, Masahiro, Mizuho-ku Nagoya-shi Aichi (JP); Inagaki, Hiroshi, Mizuho-ku Nagoya-shi Aichi (JP)
(74) Representative: Zimmermann, Gerd Heinrich

(56) References cited:
- EP-A2- 0 841 562
- EP-A2- 0 851 108
- EP-A2- 1 257 008
- DE-A1- 19 523 911
- US-A- 4 556 475

## Description

### 1. Field of the Invention

The present invention relates to a gas detecting system to be utilized for controlling the air/fuel ratio of an internal combustion engine for an automobile.

### Background Art

### 2. Description of the Related Art

In the related art, a sensor element having an oxygen pump cell and an oxygen concentration measuring cell laminated one on the other is known as a sensor element for detecting a specific gas component in an objective gas to be measured.

Here, the oxygen pump cell and the oxygen concentration measuring cell are formed by sandwiching an oxygen ion conducting solid electrolyte layer between a pair of electrodes, and the sensor element is configured by forming such a hollow measurement chamber between the oxygen pump cell and the oxygen concentration measuring cell as introduces the objective gas thereinto.

There is known the gas detecting system (as referred to JP-A-10-048180, JP-A-10-142194, JP-A-2003-185626 and EP 0 841 562), which includes: such a sensor element; a plurality of lead wires connected with the electrodes of the sensor element; and a control unit connected electrically with the plural electrodes of the sensor element through the lead wires.

Here, the control unit executes operations: to feed the oxygen pump cell with an electric current so that the output voltage of the oxygen concentration measuring cell may take a constant value, thereby to control the oxygen concentration in the measurement chamber to a constant value; and to measure the oxygen concentration in the objective gas from the value of the electric current to flow through the oxygen pump cell.

There is also known the gas detecting system (as referred to JP-A-10-048180, JP-A-10-142194, JP-A-2003-185626, JP-A-2000-081414 and EP 0 851 108), which includes: a sensor element having a plurality of electrodes on an oxygen ion conducting solid electrolyte element; and lead wires connected with the electrodes of the sensor element. A constant current or voltage for measuring a resistance is applied to the sensor element through the lead wires so that the internal resistance of the sensor element (or the solid electrolyte element) is detected on the basis of an electric signal outputted through the lead wires.

Such gas detecting system is used for applications to detect a specific gas component (e.g., oxygen or NOx) contained in the exhaust gas of an automobile, for example. The automobile is provided with a number of electric devices (e.g., an ignition coil or a dynamo) acting as a noise generating source, and it is customary to use shielded wiresasoneexampleforcounter-measuresagainst the noise. Here, the shielded wires are the lead wires having the shielding portions made of a metal material and coating the core wires in an electrically insulated state. The influences of the external noise on the core wires can be reduced by connecting the shielding portions with the ground line. By using the shielded wires, it is possible to suppress the influences of the external noise and such a reduction in the gas detecting precision as might otherwise be caused by the noise. By using these shielded wires capable of suppressing the influences of the external noise, moreover, the detection precision at the time of detecting the internal resistance of the sensor element can be made satisfactory.

Among the techniques available in the prior art to arrange lead wires connecting such gas detecting system, bundling the lead wires together, such as in a twisted manner, is known from EP1257008.

### Summary of the Invention

However, the aforementioned shielded wires are more expensive than the general lead wires thereby to raise a problem that the gas detecting system configured with the shielded wires raises the price.

By using the lead wires (as will also be called the "unshielded lead wires") having no shielding portion, the rise in the price could be suppressed. Under the influences of the noise, the electric signal to flow between the sensor element and the control unit fluctuates to raise another problem that the gas detecting precision drops. Moreover, the use of the unshielded lead wires causes the influences of the noise to fluctuate the electric signal, which flows between the sensor element and the resistance detecting unit for detecting the internal resistance of the former. This fluctuation raises a problem that the detection precision of the internal resistance drops.

Therefore, the present invention has been conceived in view of those problems and it provides a gas detecting system according to independent claims 1 or 6. Further aspects, features and details of the present invention are apparent from the dependent claims, the description and the accompanying drawings.

According to the first aspect of the invention, there is provided a gas detecting system according to independent claim 1 comprising: a sensor element including: an oxygen pump cell comprising a first pair of electrodes and a first oxygen ion conducting solid electrolyte layer between the first pair of electrodes; an oxygen concentration measuring cell comprising a second pair of electrodes and a second oxygen ion conducting solid electrolyte layer between the second pair of electrodes; and a measurement chamber that introduces an objective gas to be measured in the measurement chamber, the measurement chamber being between the oxygen pump cell and the oxygen concentration measurement cell, wherein the sensor element is made by laminating the oxygen pump cell and the oxygen concentration measuring cell; a pluralityof lead wires connected with the first and second pairs of electrodes of the sensor element; and a control unit that feeds an electric current to the oxygen pump cell so that an output voltage of the oxygen concentration measuring cell may take a constant-value, so as to control an oxygen concentration of the measurement chamber to a constant value, the control unit electrically being connected with said plurality of electrodes of the sensor element through the lead wires, wherein said plurality of lead wires includes a common lead wire connected with electrodes confronting the measurement chamber of the first and second pairs of electrodes, and wherein the common lead wire has a portion to contact in an electrically insulated state with at least one of said plurality of lead wires other than the common lead wire.

In this gas detecting system, of the plural lead wires, at least one of the lead wires other than the common l.ead wire and the common lead wire are arranged in such a mode as are electrically insulated. In other words, of the plural lead wires, two or more lead wires including at least the common lead wire have a portion to contact with each other in the electrically insulated state.

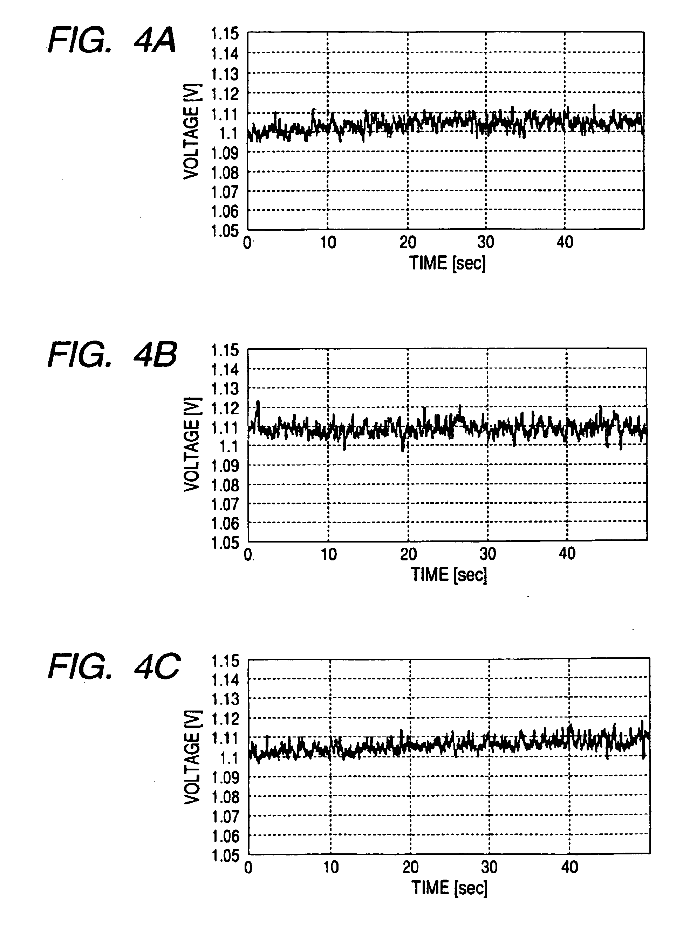

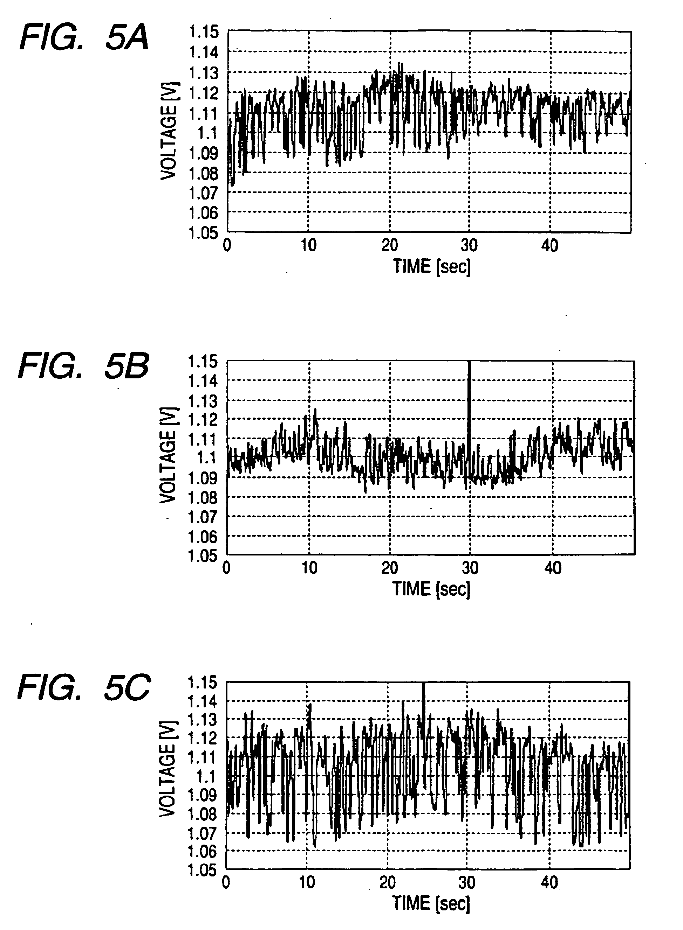

According to the measurement results (as will be later described with reference to Figs. 4A to 4C and Figs. 5A to 5C) of the measurements executed by the inventors, moreover, at least two leadwires are arranged in a mutually contacting state so that the fluctuation of the electric signal (or the electric current) by the influences of the noise can be suppressed more than the case, in which all the lead wires are arranged in the spaced state.

As a result, even in case the lead wires (i.e., the unshielded lead wires) having no shielding portion are used as the lead wires, the influences of the noise can be suppressed to make it unnecessary to employ the expensive shielded wires.

According to the gas detecting system of the invention, therefore, the lead wires having no shielding portion can be used so that the rise in the cost can be avoided by using the shielded wires. By causing two or more lead wires including at least the common lead wire to contact with each other, moreover, it is possible to reduce the influences of the noise. Moreover, the noise resistance of the gas detecting system can be improved to provide a gas detecting system, which can cope with noise sources at a low cost even if the various electric devices are increased in the automobile to increase the noise sources.

In order to reduce the influences of the noise effectively, it is preferred to bring either the lead wires to be electrically connected with the electrodes positioned outside of the measurement chamber of the oxygen concentration measuring cell and the common lead wire into contact with each other, and to bring all the lead wires into contact with each other.

The gas detecting system, further comprises: a heater unit that heats the oxygen pump cell and the oxygen concentration measuring cell of the sensor element; and it may further comprise a heater control unit that detects an internal resistance of the oxygen concentration measuring cell based on an electric signal outputted through said plurality of lead wires including said common lead wire, so as to control a calorific value of the heater unit so that the internal resistance detected may take a predetermined target resistance.

In case the gas detecting system is provided with the heater unit for generating a calorific power when fed with an electric power, a noise may be generated by the electric current fed to the heater unit. The lead wires to be connected with the plural electrodes in the oxygen pump cell and the oxygen concentration measuring cell of the sensor element may be influenced by the noise due to the electric current fed to the heater unit.

If, therefore, the invention is applied to the gas detecting system having the heater unit, it is possible to exhibit the effect of the invention more for reducing the influences of the noise on the electric current to the-leadwires. Specifically, if the gas detecting system is configured such at the two or more lead wires including at least the common lead wire have a portion to contact in the electrically insulated state, a prominent effect on the counter-measures against the noise can be obtained to suppress the drop of the gas detecting precision.

In the invention, moreover, the noise reduction is made by bringing the two or more lead wires including at least the common lead wire of the lead wires connected with the sensor element into contact with each other so that the detection precision of the internal resistance of the oxygen concentration measuring cell is also improved. As a result, the internal resistance of the oxygen concentration measuring cell can be precisely detected to control the calorific value (i.e., the value of the current fed to the heater unit) of the heater unit properly on the basis of that internal resistance.

The gas detecting system may further comprises: a binding member that binds said plurality of lead wires, and the common lead wire is bound with at least one of the other lead wires by the binding member, so as to contact with the other lead wires.

When the plural lead wires are to be brought into contact with each other, they are bound by using the binding member so that the portion for at least the lead wires to contact can be formed to reduce the influences of the noise.

Here, the binding member can be exemplified by an adhesive tape or a binding band. By using a plurality of binding members to bind the plural lead wires at a constant interval, the areas for the contacting portions of the lead wires can be retained large to improve the noise reducing effect. The binding member can also be additionally exemplified by a glass tube or a corrugated tube.

In the aforementioned gas detecting system, according to an embodiment, said common lead wire may be bound in a twisted mode with at least one of the other lead wires, so as to contact with said remaining lead wires.

When the plural lead wires are brought into contact with each other, they can be bound in the twisted state to form the contact portions, where at least the lead wires contact with each other, thereby to reduce the influences of the noise.

In the binding mode by twisting the lead wires, moreover, the plural lead wires can be bound without using the binding member. As a result, the binding member can be omitted to prevent any increase in the number of parts thereby to suppress any increase in the parts cost as the entirety of the system.

Here, the heater unit for heating the sensor element may be disposed integrally with or close to the sensor element. The order (or the current level) of the electric signal to flow into the heater unit is higher than the current level of the electric signal to flow into the sensor element. In order to enhance the noise-resistance to the sensor element, therefore, the lead wires of the heater unit are kept away from contact with the lead wires of the sensor element by neither binding them with the lead wires including the common lead wire of the sensor element nor twisting them with the lead wires of the sensor element.

In the aforementioned gas detecting system, moreover, according to an embodiment, the common lead wire may contact with all of said other lead wires.

Thus, the common lead wire is brought into contact with all the remaining lead wires connected with the sensor element. For all the lead wires, therefore, the current fluctuation due to the influences of the noise can be suppressed without using the shielded wires. In the gas detecting system, moreover, the lead wires having no shielding portion can be used as all the lead wires so that a higher cost reducing effect can be obtained.

According to the second aspect of the invention, there is provided a gas detecting system according to independent claim 6, which comprises : a sensor element including an oxygen ion conducting solid electrolyte element and a plurality of electrodes formed over the solid electrolyte element; a plurality of lead wires connected with said plurality of electrodes of the sensor element; and a resistance detecting unit that detects an internal resistance of the sensor element based on an electric signal outputted through said plurality of lead wires, wherein any of said plurality of lead wires is arranged so as to have a portion contacting in such a mode as is electrically insulated from any of the other lead wires.

In this gas detecting system, the plural lead wires, through which the electric signal for detecting the internal resistance of the sensor element flows, are arranged in such a mode that any of them has a mode in which it has a portion to contact with any of the remaining lead wires in an electrically insulated state. By thus bringing one of the plural lead wires into contact with any of the remaining lead wires, the fluctuations of the electric current due to the influences of the noise can be suppressed more than the case, in which any of the plural lead wires is arranged in a spaced state. As a result, even in case the lead wires (i.e., the unshielded lead wires) having no shielding portion are used as the lead wires, it is possible to suppress the influences of the noise. According to the gas detecting system of the invention, therefore, the internal resistance of the sensor element can be precisely detected without employing any expensive shielded wire.

The aforementioned gas detecting system may further comprises according to an embodiment: a binding member that binds said plurality of lead wires, and said plurality of lead wires are bound by the binding member so that any of said plural lead wires contacts with any of the other lead wires.

When the plural lead wires are brought into contact with each other, the plural lead wires of the sensor element are bound by using the binding member so that the portion for at least the lead wires to contact with each other can be formed to reduce the influences of the noise. According to the gas detecting system of the invention, moreover, the influences of the noise can be thus reduced to detect the internal resistance of the sensor element precisely through the lead wires. Here, the specific modes and materials of the binding member have been described hereinbefore.

In the aforementioned gas detecting system, moreover, according to an embodiment, any of said plurality of lead wires is bound in a twisted state with the other lead wires, so as to contact with any of the other lead wires.

When the plural lead wires are brought into contact with each other, they are bound in the twisted state so that the contacting portions of at least the lead wires can be formed to reduce the influences of the noise. According to the gas detecting system of the invention, therefore, the influences of the noise can be thus reduced to detect the internal resistance of the sensor element precisely through the lead wires.

Here, the heater unit is disposed integrally with or close to the sensor element so as to heat the sensor element, as described above. However, the order of the electric signal to flow into the heater unit is higher than the current level of the electric signal to flow into the sensor element. In order to enhance the noise resistance of the sensor element effectively, therefore, the lead wires of the heater portion are held in the state uncontacted from the lead wires of the sensor element by neither binding them with the lead wires including the common lead wire of the sensor element nor twisting them with the lead wires of the sensor element.

### Brief Description of the Drawings

Fig. 1 is a system configuration diagram expressing a schematic configuration of a gas detecting system 1 according to Embodiment 1;
Fig. 2 is a perspective view of a pump side lead wire 53, a common lead wire 54, a measurement side lead wire 55 and a connector 51, which are bound in a twisted mode in the gas detecting system 1 according to Embodiment 1;
Fig. 3 is a perspective view of the pump side lead wire, the common lead wire, the measurement side lead wire and the connector, which are bound by using a binding member;
Figs. 4A to 4C present the measurement results of measurement tests, which were executed to examine the influences given on current waveforms by an external noise, for three patterns of the wiring state according to the invention (i.e., Embodiment 1);
Figs. 5A to 5C present the measurement results of measurement tests, which were executed to examine the influences given on the current waveforms by the external noise, for three patterns of the wiring state of the related art;
Fig. 6 is a system configuration diagram expressing a schematic configuration of a gas detecting system 100 according to Embodiment 2; and
Fig. 7 is a sectional view showing a schematic configurationofanA/Fsensor (i.e., an A/F sensor element 110) in the gas detecting system 100 according to Embodiment 2.

### Detailed Description of the Invention

### (Embodiment 1)

A gas detecting system 1 provided with a universal air/fuel ratio sensor will be described as Embodiment 1 according to the invention with reference to the accompanying drawings. The gas detecting system of Embodiment 1 detects the concentration of oxygen contained in the exhaust gas of an internal combustion engine, and the detection result of the oxygen concentration is used to control the air/fuel ratio of the internal combustion engine.

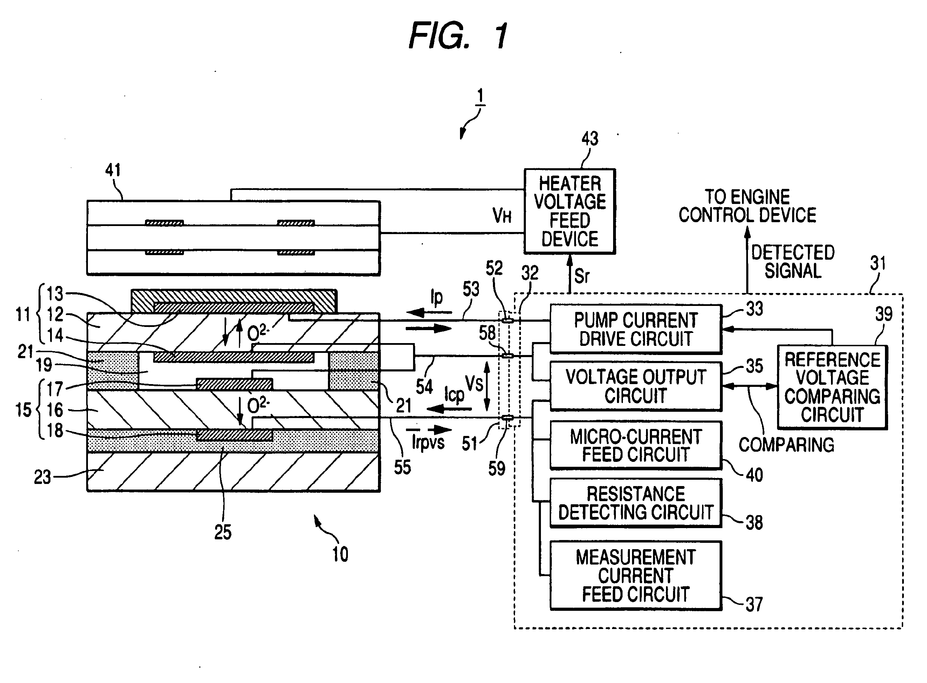

Fig. 1 is a system configuration diagram showing a schematic configuration of the gas detecting system 1.

This gas detecting system 1 is configured to include: a universal air/fuel ratio sensor element 10; a sensor control circuit 31 connected with the universal air/fuel ratio sensor element 10; a ceramic heater 41 for heating the universal air/fuel ratio sensor element 10; and a heater voltage feed device 43 connected with the ceramic heater 91. Moreover, the gas detecting system 1 further includes three lead wires (i.e., a pump side lead wire 53, a common lead wire 54 and a measurement side lead wire 55) for connecting the universal air/fuel ratio sensor element 10 and the sensor control circuit 31 electrically.

Here, the heater voltage feed device 43 and the sensor control circuit 31 start their respective actions in synchronism with a sensor start signal inputted from the outside at the starting time of the universal air/fuel ratio sensor element 10.

At first, the universal air/fuel ratio sensor element 10 is provided, as shown in Fig. 1, with: an oxygen pump cell 11 (as will also be called the "Ip cell 11") having porous electrodes 13 and 14 on the two plate faces (i.e., the surface side plate face and the back side plate face) of a solid electrolyte element 12 for pumping oxygen (O₂); an oxygen concentration measuring cell 15 (as will also be called the "Vs cell 15") having porous electrodes 17 and 18 on the two plate faces (i.e., the surface side plate face and the back side plate face) of a solid electrolyte element 16 for generating an electromotive force in accordance with the oxygen concentration; a gas detection chamber 19 interposed between the oxygen pump cell 11 and the oxygen concentration measuring cell 15 for acting as a space, into which an objective gas to be measured is introduced; a gas diffusion porous layer 21 arranged in a route for introducing the objective gas into the gas detection chamber 19; and an oxygen reference chamber 25 interposed between the oxygen concentration measuring cell 15 and a shielding layer 23 for acting as a space to reserve the oxygen.

Here, the porous electrode 14 of the oxygen pump cell 11 and the porous electrode 17 of the oxygen concentration measuring cell 15 are arranged to confront the gas detection chamber 19. On the other hand, the solid electrolyte elements 12 and 16 and the shielding layer 23 are made mainly of the partially stabilized zirconia which is solid-dissolved with Yttria as a stabilizer, and the porous electrodes 13 and 14 are made mainly of platinum.

The sensor control circuit 31 is made of the well-known circuit configuration including: a pump current drive circuit 33, a voltage output circuit 35, a measurement current feed circuit 37, a resistance detecting circuit 38, a reference voltage comparing circuit 39 and a micro-current feed circuit 40.

Of these, the micro-current feed circuit 40 feeds a micro-current Icp from the side of the porous electrode 18 to the side of the porous electrode 17. By this feed of the micro-current Icp by that micro-current feed circuit 40, the oxygen is pumped into the side (i.e., the oxygen reference chamber 25) of the porous electrode 18 so that the porous electrode 18 functions as an internal oxygen reference source. The voltage output circuit 35 detects an electromotive force Vs to be generated between the porous electrodes 17 and 18 of the oxygen concentration measuring cell 15 by the feed of the micro-current Icp by the micro-current feed circuit 40. On the other hand, the reference voltage comparing circuit 39 holds a predetermined reference voltage (e.g., 450 [mV] in this embodiment) therein, and compares the electromotive force Vs detected at the voltage output circuit 35, with the reference voltage thereby to inform the pump current drive circuit 33 of the comparison result. On the basis of the comparison result received from the reference voltage comparing circuit 39, moreover, the pump current drive circuit 33 controls a pump current Ip to be fed to the oxygen pump cell 11.

Of the universal air/fuel ratio sensor element 10, the oxygen concentration measuring cell 15 is provided for monitoring the atmosphere in the gas detection chamber 19. The electromotive force Vs according to the oxygen concentration in the gas detection chamber 19 is generated between the porous electrodes 17 and 18 of the oxygen concentration measuring cell 15. Of the universal air/fuel ratio sensor element 10, on the other hand, the oxygen pump cell 11 pumps the oxygen (O₂) out of or into the gas detection chamber 19 in accordance with the pump current Ip fed from the pump current drive circuit 33.

In short, the universal air/fuel ratio sensor element 10 pumps the oxygen (O₂) out of and into the inside of the gas detection chamber 19 by using the oxygen pump cell 11 so that the electromotive force Vs of the oxygen concentration measuring cell 15 may take a constant value (450 [mV]), namely, so that the air/fuel ratio of the gas detection chamber 19 may be a stoichiometric value.

In the universal air/fuel ratio sensor element 10 thus configured, the value and direction of the pump current Ip to flow through the oxygen pump cell 11 varies with the oxygen concentration in the objective gas, so that the oxygen concentration in the objective gas can be detected on the basis of the measurement result of the pump current Ip. In this embodiment, the voltage (or the detected signal) proportional to that pump current Ip is outputted from the sensor control circuit 31 to the not-shown engine control device, which detects the oxygen concentration of the objective gas on the basis of that detected signal.

Moreover, the universal air/fuel ratio sensor element is arranged in the exhaust pipe of an internal combustion engine, for example, so that it can detect the oxygen concentration in the exhaust gas. Here, the oxygen concentration in the exhaust gas and the air/fuel ratio have a correlation so that the air/fuel ratio of the internal combustion engine can be measured by using the oxygen concentration detected.

On the other hand, the sensor control circuit 31 is provided with the resistance detecting circuit 38. On the basis of the variation of the voltage value between the porous electrodes 17 and 18 when a measuring current Irpvs for measuring the resistance is fed from the measurement current feed circuit 37, the resistance detecting circuit 38 detects an electric resistance (or an internal resistance) Rpvsbetween the porous electrodes 17 and 18 in the oxygen concentration measuring cell 15, and outputs a resistance signal (or a voltage signal) Sr according to the electric resistance Rpvs detected to the heater voltage feed device 43. Here, the measurement current feed circuit 37 feeds the oxygen concentration measuring cell 15 with the measurement current Irpvs having a constant current value (e.g., -1.22 [mA]), and has a switching element driven on the basis of a command signal from the engine control device, when the electric resistance Rpvs of the oxygen concentration measuring cell 15 is measured. Thus, the measurement current feed circuit 37 functions to feed the measurement current Irpvs to the oxygen concentration measuring cell 15 for a predetermined time period. On the other hand, the resistance detecting circuit 38 is a peak holding circuit for holding the peak value of the voltage variation at the time of measuring the electric resistance Rpvs.

On the basis of the resistance signal Sr from the sensor control circuit 31, moreover, the heater voltage feed device 4 3 detects the temperature Tc of the universal air/fuel ratio sensor element 10 (i.e., the oxygen concentration measuring cell 15), and controls the voltage to be applied to the ceramic heater 41 on the basis of the temperature Tc detected.

Here, a correlation exists between the temperature Tc in the oxygen concentration measuring cell 15 of the universal air/fuel ratio sensor element 10 and the electric resistance Rpvs, so that the temperature Tc of the universal air/fuel ratio sensor element 10 can be detected on the basis of the electric resistance Rpvs.

The ceramic heater 41 produces, when fed with an applied voltage VH from the heater voltage feed device 43, a calorific value according to the level of the applied voltage VH thereby to heat the universal air/fuel ratio sensor element 10. Here, the heater voltage feed device 43 is configured to include a microcomputer. As the internal processing of the microcomputer, moreover, there is executed the temperature control processing, in which the level of the voltage VH to be applied to the heater is so adjusted on the basis of the resistance signal Sr from the sensor control circuit 31 that the temperature Tc of the universal air/fuel ratio sensor element 10 may be a normal value (e. g. , 800 [°C]) not smaller than an activation temperature (e.g., 600 [°C]), namely, that the electric resistance Rpvs of the oxygen concentration measuring cell 15 may be a target resistance Rta corresponding to that normal temperature. As a result, the oxygen pump cell 11 and the oxygen concentration measuring cell 15 are heated to a level higher than the activation temperature so that the universal air/fuel ratio sensor element 10 takes an active state capable of detecting the oxygen. Here, the temperature control processing to be executed in the microcomputer belonging to the heater voltage feed device 43 may be executed by adopting the well-known method such as the method disclosed in JP-A-2003-185626, for example, which is hereby incorporated by reference. Thus, any more description is omitted.

Here will be described the three lead wires (i.e., the pump side lead wire 53, the common lead wire 54 and the measurement side lead wire 55) for electrically connecting the universal air/fuel ratio sensor element 10 and the sensor control circuit 31.

The pump side lead wire 53, the common lead wire 54 and the measurement side lead wire 55 are constructed to include a core wire (as made by twisting a plurality of fine wires of a metal material) made of a metal material (e.g., copper, gold or an stainless alloy), and a coating of an insulating material (e.g., a resin or rubber) coating the core wire. Here, the pump side lead wire 53, the common lead wire 54 and the measurement side lead wire 55 are individually made of not a shielded wire having a shielding portion of a metal material for shielding the core wire but an unshielded lead wire.

The pump side lead wire 53 is electrically connected at its one end with the porous electrode 13 of the oxygen pump cell 11 and at its other with a metal terminal 52 of a connector 51.

The common lead wire 54 is branched at its one end and electrically connected with the porous electrode 14 of the oxygen pump cell 11 and the porous electrode 17 of the oxygen concentration measuring cell 15 and is electrically connected at its other end with a metal terminal 58 of the connector 51.

The measurement side lead wire 55 is electrically connected at its one end with the porous electrode 18 of the oxygen concentration measuring cell 15 and at its other with a metal terminal 59 of the connector 51.

When the connector 51 is connected with a connector 32 of the sensor control circuit 31, moreover, the porous electrodes 13, 14, 17 and 18 of the universal air/fuel ratio sensor element 10 and the sensor control circuit 31 are electrically connected through the three lead wires (i.e., the pump side lead wire 53, the common lead wire 54 and the measurement side lead wire 55).

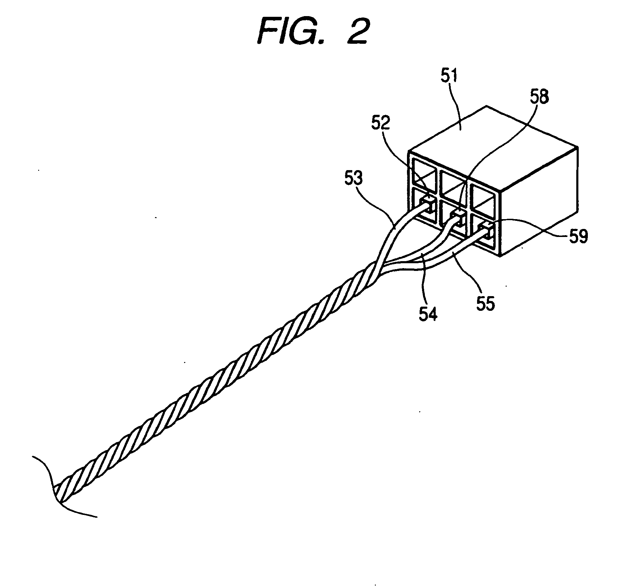

Next, the three lead wires (i.e., the pump side lead wire 53, the common lead wire 54 and the measurement side lead wire 55) and the connector 51 are presented in a perspective view in Fig. 2.

As shown in Fig. 2, the pump side lead wire 53, the common lead wire 54 and the measurement side lead wire 55 are connected at their individual end potions with the metal terminals 52, 58 and 59, which are housed in the connector 51.

Moreover, the pump side lead wire 53, the common lead wire 54 and the measurement side lead wire 55 are so arranged from the connector 51 to the universal air/fuel ratio sensor element 10 that they are bound in the mutually twisted state (or in the twist state) and contact with other lead wires. Here, the individual lead wires have coated cores so that their cores are electrically insulated from each other with their coatings contacting with each other. Fig. 2 omits the paired lead wires to be connected with a ceramic heater 41, but the lead wires connected with the ceramic heater 41 are individually connected with the metal terminals housed in the connector 51. However, these lead wires to be connected with the ceramic heater 41 are not so bound that they are twisted with any of the pump side lead wire 53, the common lead wire 54 and the measurement side lead wire 55.

Here are explained the measurement tests which were executed to examine the influences to be exerted by the external noise on the current waveforms for six patterns of different lead wire arrangements, when the power was applied between the universal air/fuel ratio sensor element 10 and the connector 51 through the pump side lead wire 53, the common lead wire 54 and the measurement side lead wire 55. Of those six patterns, the three patterns belong to the wiring state, to which the invention is applied, but the remaining three patterns belong to the wiring state of the related art.

The current waveforms of the electric current to flow through the measurement side lead wire 55 of the three lead wires are presented as the measurement results in Figs. 4A to 4C and Figs. 5A to 5C . Here, the measurement results of the three patterns of the wiring state of the present invention are presented in Figs. 4A to 4C, and the measurement results of the three patterns of the wiring state of the related art are presented in Figs. 5A to 5C.

As the wiring states according to the invention, the measurements were executed for the following three patterns: (1) the case (as will also be called the "first measurement pattern"), in which the three unshielded lead wires were bound in the aforementioned twist state and arranged in contact with each other; (2) the case (as will also be called the "second measurement pattern"), in which the three unshielded lead wires were not twisted but three bound bands were arranged substantially equidistantly, and in which the individual lead wires were bound and arranged in contact with each other; and (3) the case (as will also be called the "thirdmeasurement pattern"), in which the two unshielded lead wires (i.e., the common lead wire 54 and the measurement side lead wire 55) were bound in the twisted state to contact with each other and in which only the pump side lead wire 53 was arranged at a spacing.

As the wiring states of the related art, the measurements were executed for the following three patterns: (4) the case (as will also be called the "fourth measurement pattern"), in which the three unshielded lead wires were arranged in an uncontacted state and in parallel at a constant spacing; (5) the case (as will also be called the "fifth measurement pattern"), in which the measurement side lead wire 55 is formed of the shielded wire whereas the remaining two were formed of unshielded lead wires and in which the individual lead wires were arranged in an uncontacted state and in parallel at a constant spacing; and (6) the case (as will also be called the "sixth measurement pattern"), in which all the three lead wires were formed of the shielded wires and arranged in the uncontracted state and in parallel at a constant spacing.

Here: the measurement result of the first measurement pattern is presented in Fig. 4A; the measurement result of the second measurement pattern is presented in Fig. 4B; and the measurement result of the third measurement pattern is presented in Fig. 4C. On the other hand, the measurement result of the fourth measurement pattern is presented in Fig. 5A; the measurement result of the fifth measurement pattern is presented in Fig. 5B; and the measurement result of the sixth measurement pattern is presented in Fig. 5C.

For the individual patterns, the measurement tests were executed by arranging the three lead wires near a noise generating source (e.g., an ignition coil connected with a spark plug to feed a high voltage at an ignition timing) and by measuring the fluctuating states of the waveform of the current to flow through the measurement side lead wire 55.

More specifically, the lead wires connecting the universal air/fuel ratio sensor element 10 and the connector 51 were individually partially arranged near the ignition coils mounted on a gasoline engine (of six cylinders) having a displacement of 3,000 [cc]. The engine was run under no load and at an engine speed of 3,000 [rpm]. The universal air/fuel ratio sensor element 10 was driven by the aforementioned sensor control circuit 31, and the fluctuating states of the current waveform to flow through the measurement side lead wire 55 were measured individually for the six patterns. Here, the pump side lead wire 53, the common lead wire 54 and the measurement side lead wire 55 were individually made of the lead wires having a length of about 80 [cm].

It is understood from Figs. 4A to 4C and Figs. 5A to 5C that the noise components were made lower in the modes (i.e., the first measurement pattern, the second measurement pattern and the third measurement pattern), in which at le-ast two lead wires contac-ted with each other, than in the modes (i.e., the fourth measurement pattern, the fifth measurement pattern and the sixth measurement pattern), in which the individual lead wires were uncontacted from each other.

According to these measurement results, it is understood that the fluctuations of the electric current due to the influences of the noise could be suppressed more in case the lead wires were arranged in contact with each other than in case the lead wires were arranged in a spaced state. It is also understood that the effect to reduce the noise could be equal or more, in case the lead wires were arranged in contact with each other even if the lead wires used were unshielded, than in case the shielded wires were used.

According to the measurement results of the third measurement pattern, moreover, it is understood that the noise influences could be satisfactorily suppressed not only in case all the three lead wires were made to contact but also in case the common lead wire 54 and the measurement side lead wire 55 were made to contact.

We executed similar measurements for the two patterns of the following two cases in addition to the aforementioned six patterns to examine the influences of the noise: the case, in which the pump side lead wire 53 was made-to-contact with the measurement side lead wire 55; and the case, in which the pump side lead wire 53 and the common lead wire 54 were made to contact.

According to the measurement results of these measurement tests, it was found out that the noise influences could be better suppressed for the two patterns of the cases, in which the pump side lead wire 53 and the common lead wire 54 were made to contact and in which the common lead wire 54 and the measurement side lead wire 55 were made to contact, than the case, in which the pump side lead wire 53 and the measurement side lead wire 55 were made to contact.

From this, it is desired to arrange two or more lead wires including at least the common lead wire 54 to contact each other, in case the pump side lead wire 53, the common lead wire 54 and the measurement side lead wire 55 are made to contact so as to reduce the noise.

For the contacting portions of the lead wires, moreover, it has also been found out from the measurement results of the measuring tests we separately executed that the noise influences can be reduced not only in case the lead wire contacts with another lead wire in all of the ranges from the universal air/fuel ratio sensor element 10 to the connector 51 but also in case the lead wire contacts with another lead wire in at least a partial range from the universal air/fuel ratio sensor element 10 to the connector 51.

Here in this embodiment: the gas detecting chamber 19 corresponds to a measurement chamber, as defined in Claims; the sensor control circuit 31 to a control unit; the ceramic heater 41 to a heater unit; the sensor control circuit 31 and the heater voltage feed device 43 to heater control unit; the solid electrolyte element 12 and the solid electrolyte element 16 to a solid electrolyte layer; and the resistance detecting circuit 38 to a resistance detecting unit.

As has been described hereinbefore, the gas detecting system 1 of this embodiment is configured such that the pump side lead wire 53, the common lead wire 54 and the measurement side lead wire 55 are made of the unshielded lead wires but that the individual lead wires are bound in the twisted state so that it can suppress the influences of the noise and the reduction in the gas detecting precision. Cn the other hand, the gas detecting system 1 does not employ the shielded wire so that it can lower the cost. Moreover, the individual lead wires are bound in the twisted state so that the gas detecting system 1 can suppress the noise influences and the drop of the electric resistance (or the internal resistance) Rpvs of the sensor element (i.e., the oxygen concentration measuring cell 15) .

Moreover, the gas detecting system 1 of this embodiment is provided with the ceramic heater 41 for generating the heat when fed with the electric current, and may cause the noise due to the current feed to the ceramic heater 41. This noise may exert influences on the electric current to flow through the pump side lead wire 53, the common lead wire 54 and the measurement side lead wire 55.

On the contrary, the pump side lead wire 53, the common lead wire 54 and the measurement side lead wire 55 are bound in the twisted state so that their coatings contact with each other. Therefore, the influences of the noise generated by the power supply to the ceramic heater 41 can be reduced to suppress the deteriorations of the gas detection precision and the detection precision of the electric resistance (or the internal resistance) Rpvs of the sensor element (or the oxygen concentration measuring cell 15).

### (Embodiment 2)

Next, Embodiment 2 of the invention will be described on a gas detecting system 100, which is provided with a threshold current type air/fuel ratio sensor (as will be shortly called the "A/F sensor") as the oxygen concentration sensor, with reference to the accompanying drawings. This gas detecting system of Embodiment 2 is also mounted on an internal combustion engine.

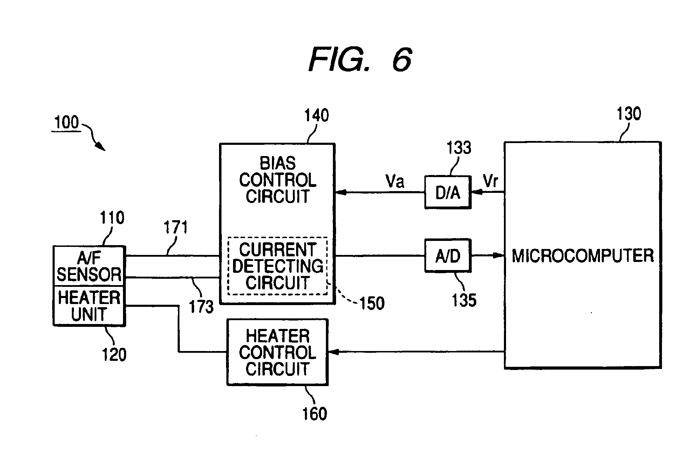

In Fig. 6, the gas detecting system 100 is provided with the A/F sensor, which outputs a linear air/fuel ratio detection signal according to the oxygen concentration in the exhaust gas as the voltage commanded by a microcomputer (as will be simply called the "micom") 130 is applied. This micom is configured to include: a CPU or a central processing unit for executing a variety of well-known operations; a ROM stored with a control program; and a RAM for storing various data. A bias control circuit 140 and a heater control circuit 160 are controlled according to a predetermined control program.

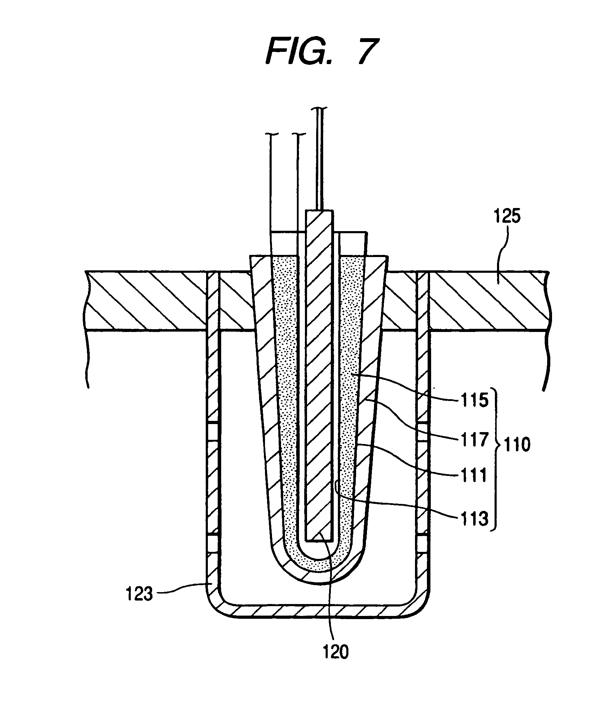

Fig. 7 is a sectional view showing a schematic configuration of the A/F sensor. This A/F sensor is protruded into an exhaust pipe 125 and configured to include a cover 123 having a plurality of gas introduction holes, an A/F sensor element 110, and a heater unit 120.

The A/F sensor element 110 is configured to include: a solid electrolyte element 115 formed into a bottomed cylinder and made mainly of zirconia; a porous outer electrode 111 formed on the outer face of the solid electrolyte element 115 and made of platinum; a porous inner electrode 113 formed on the inner face of the solid electrolyte element 115 and made of platinum; and a porous diffusion resistance layer 117 formed on the outer side of the outer electrode 111 and made of alumina, spinel or the like. On the other hand, the heater unit 120 is housed in the A/F sensor element 110 for heating the A/F sensor element 110 (or the solid electrolyte element 115) to a predetermined temperature (or a target temperature) .

In the A/F sensor thus configured, the A/F sensor element 110 generates the threshold current according to the oxygen concentration in a leaner range than the stoichiometric air/fuel ratio. In a richer range than the stoichiometric air/fuel ratio, on the other hand, the concentration of an unburned gas such as carbon monoxide (CO) or hydrocarbons (HC) varies substantially linearly with respect to the air/fuel ratio so that the A/F sensor element 110 generates the threshold current according to the concentration of CO, HC or the like.

In Fig. 6, a bias command signal Vr for applying the voltage to the A/F sensor element 110 is inputted from the micom 130 to a D/A converter 133, in which it is converted into an analog signal Va, and this analog signal Va is inputted to the bias control circuit 140. Either the detection voltage of the air/fuel ratio or the detected voltage of the element resistance is applied from that bias control circuit 140 to the A/F sensor element 110.

On the other hand, the bias control circuit 140 detects such a sensor current with a current detecting circuit (or a resistance detecting circuit) 150 as will flow when the voltage is applied to the A/F sensor element 110. The analog signal of the current value, as detected by the current detecting circuit 150, is inputted through an A/D converter 135 to the micom 130. Then, the heater unit 120 arranged in the P./F sensor element 110 is controlled in its action by the heater control circuit 160. In other words, the heating control (or the power control) of the heater unit 120 is executed to control the temperature of the A/F sensor element 110. Here, the bias control circuit 140 including the current detecting circuit 150 and the heater control circuit 160 may be made of the well-known circuit configuration, and hence there description is omitted.

Here in this gas detecting system 100, at the A/F detecting time, a positive voltage is applied to the A/F sensor element 110 so that an electric signal (or a sensor current) is outputted from the A/F sensor element 110 in response to that applied voltage. Therefore, the air/fuel ratio can be determined from that electric signal. At the time of detecting the internal resistance (or the element resistance) of the A/F sensor element 110, on the other hand, a negative voltage composed of a single shot of a predetermined frequency signal and having a predetermined time constant is applied. Then, the electric signal (or the sensor current) is detected from the A/F sensor element 110 in accordance with that applied voltage. By dividing the applied voltage by the sensor current at that time, moreover, the internal resistance of the A/F sensor element 110 is detected.

Here in the gas detecting system 100 of Embodiment 2, too, a first lead wire 171 is connected with the inner side electrode 113 of the A/F sensor element 110, and a second lead wire 173 is connected with the outer side electrode 111. These first lead wire 171 and second lead wire 173 are individually connected with the current detecting circuit 150. These first and second lead wires 171 and 173 are made to include core wires made of a metal material, and coatings made of an insulating material and covering the core wires. The first and second lead wires 171 and 173 are made of unshielded lead wires, which do not have the shielding portions made of a metal material for shielding the core wires.

In Embodiment 2, moreover, those two first lead wire 171 and second lead wire 173 are bound in the mutually twisted state (or in the twist state) like Embodiment 1 so that they are arranged to contact with each other. Here, the individual lead wires 171 and 173 have their core wires coated so that the core wires are electrically insulated from each other and arranged to have their coatings contacting with each other.

Thus in the gas detecting system 100 of Embodiment 2, too, the first lead wire 171 and the second lead wire 173 are bound in the twisted state although they are made of the unshielded lead wires. The gas detecting system 100 can suppress the influences of the noise effectively thereby to suppress the drops of the detection precision of the air/fuel ratio and the detection precision of the internal resistance in the A/F sensor element 110. Moreover, the gas detecting system 100 employs no shielded wire so that it can lower the production cost.

On the other hand, the gas detecting system 100 of Embodiment 2 is also provided with the heater portion 120, and the noise may occur due to the power supply to the heater unit 120 and may exert influences on the electric current to flow through the first lead wire 171 and the second lead wire 173. However, the first lead wire 171 and the second lead wire 173 are bound in the twisted state, and their coatings contact with each other. Therefore, it is possible to reduce the noise influences, whichmight otherwise follow the power supply to the heater unit 120. From this viewpoint, too, it is possible to suppress the drops of the detection precision of the air/fuel ratio and the detection precision of the internal resistance in the A/F sensor element 110.

The present invention has been described in connection with its embodiments. However, the invention should not be limited to Embodiments 1 and 2 but can take various modes of embodiments.

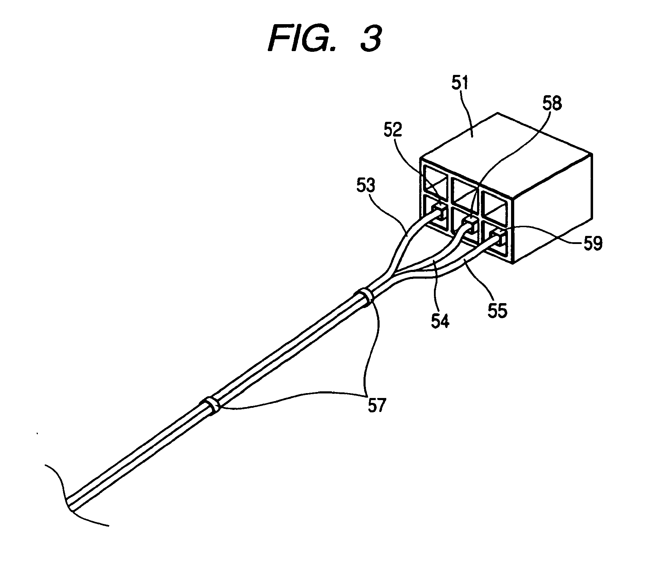

For example, the mode of binding the lead wires to each other should not be limited to the binding mode in the twisted state. The plural lead wires can also be bound by using adhesive tapes 57 or binding members, as shown in Fig. 3. By using such binding members, the plural lead wires can be easily bound to lighten the trouble of binding works.

Here can be enumerated as the binding members not only the adhesive tapes 57 but also binding bands, insulating tubes, glass tubes and corrugated tubes.

Moreover, there can also be adopted a binding mode, in which the plural lead wires are once bound in the twisted state and further bound with binding members.

In case the lead wires are bound only by twisting them, no binding member is needed to provide an advantage that the entire system can reduce the number of parts thereby to lower the cost for the materials.

As the mode using no binding member, in addition to the twisting mode, there can be adopted another mode, in which the plural lead wires are bound in a band shape like the so-called "flat cables".

Moreover, the sensor element should not be limited to either the universal air/fuel ratio sensor element including the two cells of the oxygen concentration measuring cell and the oxygen pump cell, as exemplified in Embodiment 1, or the sensor element of one cell type including one solid electrolyte element, as exemplified in Embodiment 2. There can also be used another sensor element (e.g., a NOx sensor element or a CO sensor element).

More specifically, the invention can also be applied to the NOx sensor (or the NOx sensor element) . This NOx sensor is provided with: a first measurement chamber which includes a first oxygen pumping cell and an oxygen concentration measuring cell having an oxygen ion conducting solid electrolyte layer sandwiched between a pair of electrodes and which communicates through a first diffusion rate determining layer; and a second measurement chamber which includes a second oxygen pumping cell having an oxygen ion conducting solid electrolyte layer sandwiched between a pair of electrodes and which communicates through a second diffusion rate determining layer with the first measurement chamber. Here in this NOx sensor, an electric current is fed to the first oxygen pumping cell so that the output voltage of the oxygen concentration measuring cell may take a constant value, and a constant voltage is applied to the second oxygen pumping cell in a direction to pump out the oxygen from the second measurement chamber. Thus, the nitrogen oxide concentration (i.e., the NOx concentration) in the objective gas canbe detected from the value of the electric current to flow into the second oxygen pumping cell.

In the NOx sensor having such structure, the electric current to flow into the second oxygen pumping cell is as weak as 1 [mA] at the maximum so that its gas detecting precision has a tendency to be lowered by the influences of the noise due to the electric device to be mounted on the vehicle. As in the invention, the plural lead wires for connecting the electrodes composing the NOx sensor and the control unit for detecting the NOx concentration or the internal resistance of the oxygen concentration measuring cell are twisted to make contact in the electrically insulated state. Then, it is possible to enhance the gas detecting precision effectively. It is further possible to improve the detection precision of the internal resistance of the oxygen concentration measuring cell.

Moreover, the contacts between the lead wires are desirably made such a range of the ranges from the sensor element to the control unit as is relatively influenced by the noise. These contacts can reduce the influences of the noise properly even if the lead wires have a mutually uncontacted portion.

## Claims

1. A gas detecting system comprising:
a sensor element (10) including: an oxygen pump cell (11) comprising a first pair of electrodes (13, 14) and a first oxygen ion conducting solid electrolyte layer (12) between the first pair of electrodes (13, 14); an oxygen concentration measuring cell (15) comprising a second pair of electrodes (17, 18) and a second oxygen ion conducting solid electrolyte layer (16) between the second pair of electrodes (17, 18); and a measurement chamber (19) adapted for introducing an objective gas to be measured in the measurement chamber (19), the measurement chamber (19) being between the oxygen pump cell (11) and the oxygen concentration measurement cell (15);
a plurality of lead wires (53, 54, 55) connected with the first and second pairs of electrodes (13, 14, 17, 18) of the sensor element (10);
a heater unit (41) configured to heat said oxygen pump cell (11) and said oxygen concentration measuring cell (15);
a heater lead wire configured to feed electric current to said heater unit (41); and
a control unit (31) configured to feed an electric current to the oxygen pump cell (11) so that an output voltage of the oxygen concentration measuring cell (15) may take a constant value, so as to control an oxygen concentration of the measurement chamber (19) to a constant value, the control unit (31) electrically being connected with said plurality of electrodes (13, 14, 17, 18) of the sensor element (10) through the lead wires (53, 54, 55),
wherein said plurality of lead wires (53, 54, 55) includes a common lead wire (54) connected with electrodes (14, 17) confronting the measurement chamber (19) of the first and second pairs of electrodes (13, 14, 17, 18), wherein said common lead wire (54) is bound with the other lead wires (53, 55) while the heater lead wire is kept away from contact with said plurality of lead wires (53, 54, 55), and
wherein the common lead wire (54) has a portion to contact in an electrically insulated state with at least one of said plurality of lead wires (53, 54, 55) other than the common lead wire (54).

2. A gas detecting system according to claim 1, further comprising:
a heater unit (41) configured to heat the oxygen pump cell (11) and the oxygen concentration measuring cell (15) of the sensor element (10);and
a heater control unit (31, 43) configured to detect an internal resistance of the oxygen concentration measuring cell (15) based on an electric signal outputted through said plurality of lead wires (53, 54, 55) including said common lead wire (54), so as to control a calorific value of the heater unit (41) so that the internal resistance detected may take a predetermined target resistance.

3. A gas detecting system according to claim 1 or 2, further comprising:
a binding member (57) that binds said plurality of lead wires (53, 54, 55),
wherein the common lead wire (54) is bound with at least one of the other lead wires by the binding member (57), so as to contact with the other lead wires (53, 55).

4. A gas detecting system according to any of the preceding claims,
wherein the common lead wire (54) is bound in a twisted mode with at least one of the other lead wires (53, 55), so as to contact with the other lead wires (53, 55).

5. A gas detecting system according to any of the preceding claims,
wherein the common lead wire (54) contacts with all of the other lead wires of said plurality of lead wires (53, 54, 55).

6. A gas detecting system comprising:
a sensor element (10) including an oxygen ion conducting solid electrolyte element (12, 16) and a plurality of electrodes (13, 14, 17, 18) formed over the solid electrolyte element (12, 16);
a plurality of lead wires (53, 54, 55) connected with said plurality of electrodes (13, 14, 17, 18) of the sensor element (10); and
a resistance detecting unit (38) configured to detect an internal resistance of the sensor element (10) based on an electric signal outputted through said plurality of lead wires (53, 54, 55),
wherein any of said plurality of lead wires (53, 54, 55) is arranged so as to have a portion contacting in such a mode as is electrically insulated from any of the other lead wires (53, 54, 55);
the gas detecting system further comprising
a heater unit (41) adapted to heat the sensor element (10);
a heater control unit (31, 43) to control a calorific value of the heater unit (41);
heater lead wires to feed electric current to the heater unit (41);
wherein the heater lead wires are kept away from contact with the plurality of lead wires (53, 54, 55) connected with the plurality of electrodes (13, 14, 17, 18) of the sensor element (10).

7. A gas detecting system according to claim 6, further comprising:
a binding member (57) that binds said plurality of lead wires (53, 54, 55),
wherein said plurality of lead wires (53, 54, 55) are bound by the binding member (57) so that any of said plural lead wires contacts with any of the other lead wires (53, 54, 55).

8. A gas detecting system according to claim 6 or 7, wherein any of said plurality of lead wires (53, 54, 55) is bound in a twisted state with the other lead wires (53, 54, 55), so as to contact with any of the other lead wires.

## Patentansprüche

1. Gaserfassungssystem umfassend:
ein Sensorelement (10) aufweisend: eine Sauerstoffpumpzelle (11) umfassend ein erstes Elektrodenpaar (13, 14) und eine erste Sauerstoffionen-leitende Festelektrolytschicht (12) zwischen dem ersten Elektrodenpaar (13, 14);
eine Sauerstofflkonzentrationsmesszelle (15) umfassend ein zweites Elektrodenpaar (17, 18) und eine zweite Sauerstoffionen-leitende Festelektrolytschicht (16) zwischen dem zweiten Elektrodenpaar (17, 18); und
eine Messkammer (19), die zum Einführen eines in der Messkammer (19) zu messenden Zielgases in die Messkammer angepasst ist, wobei sich die Messkammer (19) zwischen der Sauerstoffpumpzelle (11) und der Sauerstofflkonzentrationsmesszelle (15) befindet;
eine Vielzahl von mit dem ersten und dem zweiten Elektrodenpaar (13, 14, 17, 18) des Sensorelements (10) verbundenen Leitungsdrähten (53, 54, 55);
eine Heizungseinheit (41), die eingerichtet ist, um die Sauerstoffpumpzelle (11) und die Sauerstofflkonzentrationsmesszelle (15) zu heizen;
ein Heizungsleitungsdraht, der eingerichtet ist, um elektrischen Strom zur Heizungseinheit (41) zu leiten; und
eine Steuereinheit (31), die eingerichtet ist, um einen elektrischen Strom zu der Sauerstoffpumpzelle (11) zu leiten, so dass eine Ausgabespannung der Sauerstoffkonzentrationsmesszelle (15) einen konstanten Wert annehmen kann, um eine Sauerstoffkonzentration der Messkammer (19) auf einen konstanten Wert zu steuern, wobei die Steuereinheit (31) über die Leitungsdrähte (53, 54, 55) elektrisch mit der Vielzahl von Elektroden (13, 14, 17, 18) des Sensorelements (10) verbunden ist,
wobei die Vielzahl von Leitungsdrähten (53, 54, 55) einen gemeinsamen Leitungsdraht (54) umfasst, der mit der Messkammer (19) entgegentretenden Elektroden (14, 17) des ersten und zweiten Elektrodenpaares (13, 14, 17, 18) verbunden ist, wobei der gemeinsame Leitungsdraht (54) mit den anderen Leitungsdrähten (53, 55) gebunden ist, während der Heizungsleitungsdraht von einem Kontakt mit der Vielzahl von Leitungsdrähten (53, 54, 55) ferngehalten wird, und
wobei der gemeinsame Leitungsdraht (54) einen Abschnitt aufweist, um in einem elektrisch isolierten Zustand zumindest einen der Vielzahl von Leitungsdrähten (53, 54, 55), der ein anderer als der gemeinsame Leitungsdrahl (54) ist, zu kontaktieren.

2. Gaserfassungssystem gemäß Anspruch 1, weiterhin umfassend:
eine Heizungseinheit (41), die eingerichtet ist, um die Sauerstoffpumpzelle (11) und die Sauerstoffkonzentrationsmesszelle (15) des Sensorelements (10) zu heizen; und
eine Heizungssteuereinheit (31, 43), die eingerichtet ist, um einen inneren Widerstand der Sauerstoftkonzentrationsmesszelle (15) auf Basis eines elektrischen Signals zu erfassen, das durch die Vielzahl von Leitungsdrähten (53, 54, 55) umfassend den gemeinsamen Leitungsdraht (54) ausgegeben wird, um einen kalorischen Wert der Heizungseinheit (41) so zu steuern, dass der erfasste innere Widerstand einen vorbestimmten Zielwiderstand annimmt.

3. Gaserfassungssystem gemäß Anspruch 1 oder 2, weiterhin umfassend:
ein Bindeelement (57), das die Vielzahl von Leitungsdrähten (53, 54, 55) bindet,
wobei der gemeinsame Leitungsdraht (54) mit zumindest einem der anderen Leitungsdrähte durch das Bindeelement (57) so verbunden ist, dass er die anderen Leitungsdrähte (53, 55) kontaktiert.

4. Gaserfassungssystem gemäß einem der vorstehenden Ansprüche,
wobei der gemeinsame Leitungsdraht (54) mit zumindest einem der anderen Leitungsdrähte (53, 55) auf verdrehte Art verbunden ist, so dass er die anderen Leitungsdrähte (53, 55) kontaktiert.

5. Gaserfassungssystem gemäß einem der vorstehenden Ansprüche,
wobei der gemeinsame Leitungsdraht (54) all die anderen der Vielzahl von Leitungsdrähten (53, 54, 55) kontaktiert.

6. Gaserfassungssystem umfassend:
ein Sensorelement (10), umfassend ein Sauerstoffionen-leitendes Festelektrolytelement (12, 16) und eine Vielzahl von Elektroden (13, 14, 17, 18), die über dem Festelektrolytelement (12, 16) ausgebildet sind;
eine Vielzahl von Leitungsdrähten (53, 54, 55), die mit der Vielzahl von Elektroden (13, 14, 17, 18) des Sensorelements (10) verbunden sind; und
eine Widerstandsbestimmungseinheit (38), die eingerichtet ist, um einen inneren Widerstand des Sensorelements (10) auf Basis eines elektrischen Signals zu bestimmen, das durch die Vielzahl von Leitungsdrähten (53, 54, 55) ausgegeben wird,
wobei jeder Leitungsdraht der Vielzahl von Leitungsdrähten (53, 54, 55) so angeordnet ist, dass er einen derart kontaktierenden Abschnitt hat, der elektrisch isoliert von jedem der anderen Leitungsdrähte (53, 54, 55) ist;
wobei das Gaserfassungssystem weiterhin umfasst:
eine Heizungseinheit (41), die eingerichtet ist, das Sensorelement (10) zu heizen;
eine Heizungssteuereinheit (31, 43), um einen kalorischen Wert der Heizungseinheit (41) zu steuern;
Heizungsleitungsdrähte, um elektrischen Strom zu der Heizungseinheit (41) zu leiten;
wobei die Heizungsleitungsdrähte von einem Kontakt mit der Vielzahl von Leitungsdrähten (53, 54, 55), die mit der Vielzahl von Elektroden (13, 14, 17, 18) des Sensorelements (10) verbunden sind, ferngehalten werden.

7. Gaserfassungssystem gemäß Anspruch 6, weiterhin umfassend:
ein Bindelement (57), das die Vielzahl von Leitungsdrähten (53, 54, 55) bindet,
wobei die Vielzahl von Leitungsdrähten (53, 54, 55) durch das Bindelement (57) so gebunden ist, dass jeder der vielen Leitungsdrähte mit jedem der anderen Leitungsdrähte (53, 54, 55) kontaktiert.

8. Gaserfassungssystem gemäß Anspruch 6 oder 7, wobei jeder der Vielzahl von Leitungsdrähten (53, 54, 55) auf verdrehte Art mit den anderen Leitungsdrähten (53, 54, 55) gebunden ist, so dass er mit jedem der anderen Leitungsdrähte kontaktiert.

## Revendications

1. Système de détection de gaz comprenant :
un élément capteur (10) incluant : une cellule de pompe à oxygène (11) comprenant une première paire d'électrodes (13, 14) et une première couche d'électrolyte solide conducteur des ions oxygène (12) entre la première paire d'électrodes (13, 14) ; une cellule de mesure de la concentration en oxygène (15) comprenant une seconde paire d'électrodes (17, 18) et une seconde couche d'électrolyte solide conducteur des ions oxygène (16) entre la seconde paire d'électrodes (17, 18) ; et une chambre de mesure (19) adaptée pour introduire un gaz sujet de la mesure dans la chambre de mesure (19), la chambre de mesure (19) étant entre la cellule de pompe à oxygène (11) et la cellule de mesure de la concentration en oxygène (15) ;
une pluralité de conducteurs (53, 54, 55) connectés aux première et seconde paires d'électrodes (13, 14, 17, 18) de l'élément capteur (10) ;
une unité de chauffage (41) configurée pour chauffer ladite cellule de pompe à oxygène (11) et ladite cellule de mesure de la concentration en oxygène (15) ;
un conducteur de chauffage configuré pour fournir du courant électrique à ladite unité de chauffage (41) ; et
une unité de commande (31) configurée pour fournir du courant électrique à la cellule de pompe à oxygène (11) de façon qu'une tension de sortie de la cellule de mesure de la concentration en oxygène (15) puisse prendre une valeur constante, pour amener une concentration en oxygène dans la chambre de mesure (19) à une valeur constante, l'unité de commande (31) étant connectée électriquement à ladite pluralité d'électrodes (13, 14, 17, 18) de l'élément capteur (10) via les conducteurs (53, 54, 55),
ladite pluralité de conducteurs (53, 54, 55) incluant un conducteur commun (54) connecté à des électrodes (14, 17) de part et d'autre de la chambre de mesure (19) et appartenant aux première et seconde paires d'électrodes (13, 14, 17, 18), ledit conducteur commun (54) étant relié aux autres conducteurs (53, 55) tandis que le conducteur de chauffage est maintenu à l'écart d'un contact avec ladite pluralité de conducteurs (53, 54, 55), et
le conducteur commun (54) comportant une portion de venue en contact, à l'état électriquement isolé, avec l'un au moins de ladite pluralité de conducteurs (53, 54, 55) autre que le conducteur commun (54).

2. Système de détection de gaz selon la revendication 1, comprenant, en outre :
une unité de chauffage (41) configurée pour chauffer la cellule de pompe à oxygène (11) et la cellule de mesure de la concentration en oxygène (15) de l'élément capteur (10) ; et
une unité de commande de chauffage (31, 43) configurée pour détecter une résistance interne de la cellule de mesure de la concentration en oxygène (15) sur la base d'un signal électrique émis via ladite pluralité de conducteurs (53, 54, 55) incluant ledit conducteur commun (54) de façon à commander une valeur calorifique de l'unité de chauffage (41) pour que la résistance interne détectée puisse prendre la valeur d'une résistance cible prédéterminée.

3. Système de détection de gaz selon la revendication 1 ou 2, comprenant, en outre :
un élément de liaison (57) qui lie ladite pluralité de conducteurs (53, 54, 55) ;
système dans lequel le conducteur commun (54) est lié à l'un au moins des autres conducteurs par l'élément de liaison (57), de façon à être en contact avec les autres conducteurs (53, 55).

4. Système de détection de gaz selon l'une quelconque des revendications précédentes,
dans lequel le conducteur commun (54) est lié selon un mode torsadé avec l'un au moins des autres conducteurs (53, 55), de façon à être en contact avec les autres conducteurs (53, 55).

5. Système de détection de gaz selon l'une quelconque des revendications précédentes,
dans lequel le conducteur commun (54) est en contact avec tous les autres conducteurs de ladite pluralité de conducteurs (53, 54, 55).

6. Système de détection de gaz, comprenant :
un élément capteur (10) incluant un élément électrolyte solide conducteur des ions oxygène (12, 16) et une pluralité d'électrodes (13, 14, 17, 18) formées sur l'élément électrolyte solide (12, 16) ;
une pluralité de conducteurs (53, 54, 55) connectés à ladite pluralité d'électrodes (13, 14, 17, 18) de l'élément capteur (10) ; et
une unité détectrice de résistance (38) configurée pour détecteur une résistance interne de l'élément capteur (10) sur la base d'un signal électrique émis via ladite pluralité de conducteurs (53, 54, 55),
tout conducteur (53, 54, 55) de ladite pluralité étant agencé de façon à avoir une portion en contact de telle sorte qu'il est électriquement isolé de tout autre conducteur (53, 54, 55) de ladite pluralité ;
le système de détection de gaz comprenant, en outre :
une unité de chauffage (41) adaptée à chauffer l'élément capteur (10) ;
une unité de commande de chauffage (31, 43) pour commander une valeur calorifique de l'unité de chauffage (41) ;
des conducteurs de chauffage pour fournir du courant électrique à l'unité de chauffage (41) ;
les conducteurs de chauffage étant maintenus à l'écart d'un contact avec ladite pluralité de conducteurs (53, 54, 55) connectés à la pluralité d'électrodes (13, 14, 17, 18) de l'élément capteur (10).

7. Système de détection de gaz selon la revendication 6, comprenant, en outre :
un élément de liaison (57) qui lie ladite pluralité de conducteurs (53, 54, 55),
les conducteurs (53, 54, 55) de ladite pluralité étant liés par l'élément de liaison (57) de façon que tout conducteur de la pluralité soit en contact avec tout autre conducteur (53, 54, 55).

8. Système de détection de gaz selon la revendication 6 ou 7, dans lequel tout conducteur de ladite pluralité de conducteurs (53, 54, 55) est lié selon un mode torsadé avec les autres conducteurs (53, 54, 55), de façon à être en contact avec tout autre parmi les autres conducteurs.
